# EUROPÄISCHE PATENTSCHRIFT

(11) **EP 3 646 123 B1**
(45) Veröffentlichungstag und Bekanntmachung des Hinweises auf die Patenterteilung: **14.12.2022**
(21) Anmeldenummer: 18733585.6
(22) Anmeldetag: 21.06.2018
(51) Int. Cl.: G05B 19/042, G05B 19/408

(54) **WERKZEUGMASCHINE MIT EINER MEHRZAHL VON SENSOREN UND ENTSPRECHENDES VERFAHREN**
MACHINE TOOL HAVING A PLURALITY OF SENSORS AND RESPECTIVE METHOD
MACHINE-OUTIL DOTÉE D'UNE PLURALITÉ DE CAPTEURS ET PROCÉDÉ CORRESPONDANT

(30) Priorität: 28.06.2017 DE 102017210959
(43) Veröffentlichungstag der Anmeldung: 06.05.2020
(73) Patentinhaber: TRUMPF Werkzeugmaschinen GmbH + Co. KG, 71254 Ditzingen (DE)
(72) Erfinder: HAMMANN, Gerhard, 70825 Korntal-Münchingen (DE); RENZ, Bernd, 71726 Benningen am Neckar (DE); BINDER, Eckhard, 71711 Steinheim (DE); BORELLI, Daniele, 71154 Nufringen (DE)
(74) Vertreter: Trumpf Patentabteilung
(86) Internationale Anmeldenummer: PCT/EP2018/066599
(87) Internationale Veröffentlichungsnummer: WO 2019/002091

(56) Entgegenhaltungen:
- EP-A1- 2 434 360
- WO-A1-02/23133
- DE-A1- 10 144 103

## Beschreibung

Die Erfindung betrifft eine Werkzeugmaschine mit einer Mehrzahl von Sensoren zur Erfassung einer Messgröße, die in ein erstes Netzwerk eingebunden sind gemäß dem Oberbegriff von Anspruch 1.

Weiterhin betrifft die Erfindung ein Verfahren zur Überwachung und/oder Regelung einer Werkzeugmaschine gemäß dem Oberbegriff von Anspruch 8.

An Werkzeugmaschinen treten gelegentlich Störungen (beispielsweise qualitätsmindernde Schwingungen) auf, deren Ursachen mit den vorhandenen Bordmitteln nicht eindeutig diagnostizierbar sind. Folglich müssen häufig kostspielige Vorortanalysen durch Experten mit spezieller Messausrüstung durchgeführt werden. Für eine nachhaltige Optimierung des dynamischen Verhaltens fehlen Informationen.

Es ist grundsätzlich bekannt, Sensoren an Werkzeugmaschinen vorzusehen und diese auch zu vernetzen. Diese Sensoren liefern jedoch nur Aussagen über einzelne Merkmale einer Werkzeugmaschine, z.B. Positionen von Aktoren oder Temperaturen von Baugruppen. Auf die zeitgleiche der Erfassung der Messwerte kommt es dabei nicht an. Komplexe Zustände, wie zum Beispiel Schwingungsformen, Nivellierungszustände oder das dynamische Verhalten einer Werkzeugmaschine beschreibende Kenngrößen (z.B. Mechanikfrequenzgang) können mit den herkömmlichen Sensoren nicht erfasst oder überwacht werden.

Aus der EP 2 434 360 A1 ist eine Bewegungssteuerung bekannt, bei der Datentraces einer Werkzeugmaschine mit zeitsynchronisierte Sensoren aufgenommen werden.

Aus der DE 101 44 103 A1 ist ein Verfahren zur Steuerung einer technischen Maschine, Anlage oder Vorrichtung, bekannt, wobei die technische Maschine, Anlage oder Vorrichtung eine oder mehrere Walzen oder Zylinder aufweist und wobei mindestens von einer dieser Walzen oder Zylinder mindestens ein betriebsbedingter Parameter erfasst und zur Steuerung der technischen Maschine, Anlage oder Vorrichtung verwendet wird.

Aus der WO 02/23133 A1 ist ein Sensorkopf bekannt, der ein Sensorelement aufweist, dessen Messsignal einem Komparator zuführbar ist. Dieser vergleicht das Messsignal mit einem Schwellwert und leitet ein binäres Ausgangssignal an eine Übermittlungsschaltung weiter. Der Sensorkopf wird über eine proprietäre Zweidrahtleitung mit elektrischer Energie versorgt.

Aufgabe der vorliegenden Erfindung ist es, eine Werkzeugmaschine bereit zu stellen, deren Zustand permanent überwacht und/oder diagnostiziert werden kann und bei der gegebenenfalls aufgrund der erfassten Sensorsignale auf Störungsursachen zurückgeschlossen werden kann, um geeignete Maßnahmen zum optimalen Betrieb der Werkzeugmaschine zu ergreifen (Regelung, Reparatur, Filteranpassung ...).

Gelöst wird diese Aufgabe erfindungsgemäß durch eine Werkzeugmaschine mit den Merkmalen des Patentanspruchs 1. Durch diese Maßnahme wird für die Messsignale unterschiedlicher Sensoren der gleiche bzw. ein gemeinsamer zeitlicher Bezug, insbesondere eine gemeinsame Zeitbasis, hergestellt. Dies ermöglicht die konsistente Verarbeitung mehrerer Signale. Die Synchronisationseinrichtung kann beispielsweise als Bestandteil eines drahtgebundenen oder drahtlosen Netzwerks oder auch als DCF-Empfänger ausgebildet sein. Die Messgrößen können Messsignale sein. Getriggert heißt, dass eine Aktion zu einem oder mehreren Zeitpunkten ausgelöst werden kann. Diese Auslösung kann bspw. der Zeitpunkt der Erfassung einer Messgröße sein. Bei mehrfachen Auslösungen müssen dabei die zeitlichen Abstände zwischen ihnen nicht notwendigerweise äquidistant sein, also d.h. es muss sich keine einheitliche Periodendauer einstellen.

Durch die insbesondere permanente Integration von Sensoren können mehr Informationen über die Werkzeugmaschine jederzeit bereit gestellt und zur Diagnose, insbesondere Ferndiagnose, herangezogen werden. Bei Verwendung von Sensoren, die beispielsweise in großen Stückzahlen in Automobilen und Smartphones eingesetzt werden, und deren Vernetzung in einem geeigneten Framework kann dieses zu wirtschaftlich vertretbaren Kosten realisiert werden. Die Signale der Sensoren erlauben dabei unter bestimmten Voraussetzungen auch eine Regelung von Zuständen der Werkzeugmaschine. Zusätzliche Sensoren können bei Bedarf, z.B. von einem Servicetechniker, einfach angebracht und in das Netzwerk integriert werden.

Einer oder mehrere Sensoren sind in einem Sensormodul angeordnet, das einen Zeitgeber aufweist, der mit der Synchronisationseinrichtung verbunden ist. Der Zeitgeber kann als Timer oder Steuerbaustein zur Realisierung zeitbezogener Funktionen ausgebildet sein. Dadurch ist es besonders einfach möglich, die Messgrößenerfassung der Sensoren zeitlich zu synchronisieren. Jeder dieser Zeitgeber kann jeweils mit einer übergeordneten Uhr/Zeitgeber über ein Netzwerk abgeglichen werden, d.h. alle Uhren/Zeitgeber können die gleiche Zeit zeigen und damit "synchron" laufen. Der Auslösezeitpunkt zur Erfassungen eines Messwertes eines jeden Sensors kann sich von seinem lokalen Zeitgeber ableiten und kann parametriert werden. Es kann eine äquidistante lokale Auslösung gewählt werden, d.h. die Messwerte werden periodisch erfasst.

Die Sensoren sind als Beschleunigungssensoren, insbesondere MEMS-Sensoren, zur Erfassung von Schwingungen ausgebildet. Dadurch ist es möglich, das dynamische Verhalten einer Werkzeugmaschine zu erfassen. Beschleunigungssensoren sind kostengünstig verfügbar, da diese in großen Stückzahlen beispielsweise in der Automobilindustrie eingesetzt werden. Das erste Netzwerk, in dem die Sensoren eingebettet sind, kann beliebig um weitere Sensoren erweitert werden, um zusätzliche Messgrößen zu erhalten. MEMS-Sensoren sind klein, preiswert und dennoch präzise und robust.

Die Diagnosemöglichkeiten werden erweitert, wenn in das Netzwerk ein oder mehrere weitere Sensoren zur Erfassung wenigstens einer zweiten Art von Messgröße eingebunden sind, insbesondere einer anderen Messgröße als durch die ersten Sensoren erfasst wird, beispielsweise eine andere Messgröße als die Beschleunigung. Beispielsweise kann zumindest ein weiterer Sensor als Drehratensensor, Magnetfeldsensor, Schallsensor, Temperatursensor, Feuchtigkeitssensor, optischer Sensor oder multifunktionaler Sensor ausgebildet sein. Ein weiterer Sensor kann auch als multifunktionaler Sensor ausgebildet sein, der unterschiedliche Messgrößen erfassen kann. Somit werden zusätzliche dauerhaft verfügbare Messmittel ("Bordmittel") zur Analyse des Verhaltens von Werkzeugmaschinen zur Verfügung gestellt. Sie erlauben eine umfassende, schnelle und zuverlässige Ferndiagnose von Fehlerursachen, die vorhersehbar oder unvorhersehbar innerhalb der Lebensdauer einer Maschine auftreten können. Durch offline Diagnose von Sensorsignalen nach deren Aufzeichnung sind sehr komplexe Auswertungen großer Datenmengen z.B. mittels Methoden des Machinelearnings möglich, die zu neuen Erkenntnissen über Fehlermechanismen und Wirkzusammenhänge der Maschine führen können. Dadurch können bislang unbekannte Fehlerursachen schneller aufgedeckt und nachhaltig abgestellt werden. Zeitaufwendige oder kostspielige Vororteinsätze von Experten können weitgehend vermieden werden. Fehlerbehebungsmaßnahmen können zielsicher definiert werden. Der unnötige Tausch von Komponenten, die nichts mit der Störungsursache zu tun haben, kann vermieden werden. Der Aufwand von Retouren von Komponenten, die bei der Fehlerbehebung nicht benötigt werden, kann reduziert werden. Unproduktive Standzeiten von Werkzeugmaschinen durch nicht erfolgreiche Fehlerbehebungsmaßnahmen können reduziert werden. Außerdem können Produktionsausfälle aufgrund fehlerhafter Maschinen auf ein Minimum reduziert werden.

Weitere Vorteile ergeben sich, wenn Beschleunigungssensoren für Beschleunigungen in unterschiedliche Achsrichtungen der Werkzeugmaschine und/oder mehrachsige Beschleunigungssensoren vorgesehen sind. Dadurch kann das Schwingungsverhalten der Werkzeugmaschine in unterschiedlichen Richtungen erfasst werden. Die Diagnosemöglichkeiten werden dadurch erweitert.

Besondere Vorteile ergeben sich, wenn zumindest ein Sensor an einem zu bearbeitenden Werkstück angeordnet ist. Somit können auch Schwingungen eines Werkstücks bei der Diagnose berücksichtigt werden und gegebenenfalls darauf reagiert werden.

Gemäß einer Ausgestaltung der Erfindung kann das erste Netzwerk zumindest teilweise als drahtloses Netzwerk ausgebildet sein. Beispielsweise kann das drahtlose Netzwerk als WLAN-Netzwerk oder Bluetooth-Netzwerk ausgebildet sein. Für Diagnose-Zwecke ist es in der Regel ausreichend, die Sensorsignale, insbesondere Messgrößen, offline, d.h. nach deren Aufzeichnung, auszuwerten. Hierzu bietet es sich an, die Sensoren bzw. Sensormodule in einem DrahtlosNetzwerk zu vernetzen, das sehr kostengünstig realisiert werden kann und flexibel erweiterbar ist.

Gemäß einer weiteren Ausgestaltung der Erfindung kann vorgesehen sein, dass das erste Netzwerk zumindest teilweise als kabelgebundenes Netzwerk ausgebildet ist. Zur Nutzung der Sensorsignale, insbesondere Messgrößen, für Regelungszwecke müssen harte Echtzeitanforderungen erfüllt und eine hohe Zuverlässigkeit sichergestellt werden. Dies erfordert eine kabelgebundene Vernetzung der betroffenen Sensoren bzw. Sensormodule. Die kabelgebundene Vernetzung kann beispielsweise über, insbesondere für den Einsatzzweck optimierte, Bussysteme, beispielsweise mittels kostengünstigen Zweidrahtleitungen, realisiert werden.

Zudem ist es denkbar, dass ein zweites Netzwerk vorgesehen ist, in das mehrere Sensoren eingebunden sind, wobei das erste und das zweite Netzwerk über einen Sensorknoten verbunden sind. Das zweite Netzwerk kann als drahtloses oder verdrahtetes Netzwerk ausgebildet sein.

Weiterhin kann vorgesehen sein, dass das erste und/oder zweite Netzwerk mit einer Maschinensteuerung verbunden sind. Somit können die von den Sensoren erfassten Messgrößen durch die Maschinensteuerung genutzt werden, insbesondere, um den Zustand der Werkzeugmaschine zu regeln oder zu steuern.

Besonders vorteilhaft ist es, wenn zur Energieversorgung eines oder mehrerer drahtlos vernetzter Sensoren und/oder Sensormodule ein Generator zur Gewinnung von Energie aus der Umgebungstemperatur, Vibrationen, Luftströmungen oder elektromagnetischen Feldern o.ä. vorgesehen ist. Man spricht hier von "Energie-Harvesting"-Lösungen. Dadurch kann eine autarke Energieversorgung der Sensoren oder Sensormodule erfolgen, was eine flexible Erweiterung des Sensornetzwerks mit zusätzlichen Sensoren und/oder Sensormodulen wesentlich erleichtert.

Um die Messgrößen auch offline und zu einem späteren Zeitpunkt verfügbar zu machen, ist es vorteilhaft, wenn eine Speichereinrichtung zur Speicherung von Sensorsignalen vorgesehen ist.

In den Rahmen der Erfindung fällt außerdem ein Verfahren zur Überwachung und/oder Regelung einer Werkzeugmaschine mit den Merkmalen des Patentanspruchs 8. Durch die permanente Integration eines Netzwerks von Sensoren in die Maschine können beispielsweise Ursachen von Schwingungsphänomenen erkannt werden. Die Sensoren können an den interessierenden Stellen, insbesondere an Stellen, an denen Schwingungen erwartet werden, verbaut werden. Es können Weg-, Bahn- oder Schwingformmessungen durchgeführt werden. Störungsursachen, die vorhersehbar oder unvorhersehbar innerhalb der Lebensdauer einer Maschine auftreten können, können schnell und sicher per Ferndiagnose erkannt werden. Sensorsignale, die aufgezeichnet werden, können auch im Nachhinein offline analysiert werden, um bislang unbekannte Ursachen von Störungen aufzuspüren. Durch den eindeutigen zeitlichen Bezug werden die Möglichkeiten der Diagnose deutlich verbessert und erweitert.

Gemäß einer Verfahrensvariante können weitere Sensoren zur Erfassung weiterer Größen in das erste Netzwerk eingebunden werden. Es ist nicht nur möglich, den Zustand einer Werkzeugmaschine zu diagnostizieren sondern es kann auch das dynamische Verhalten der Werkzeugmaschine aufgrund der Sensordaten bzw. Messgrößen geregelt werden. Insbesondere kann mindestens eine das dynamische Verhalten der Werkzeugmaschine beschreibende Kenngröße aufgrund der Messgrößen geregelt werden.

Vorteile ergeben sich, wenn ein oder mehrere Sensoren und/oder Sensormodule durch eine dezentrale Energiequelle mit Leistung versorgt werden. Insbesondere kann ein sogenanntes "Energy-Harvesting" eingesetzt werden.

Gemäß einer Verfahrensvariante kann vorgesehen sein, dass die Messgröße zumindest eines Beschleunigungssensors doppelt integriert wird. Durch diese Maßnahme kann ein Lagesensor ersetzt werden. Außerdem kann dadurch eine virtuelle Messtasterfunktion realisiert werden. Beispielsweise kann die Differenz zwischen einem Motormesssystem und dem virtuellen Messtaster gebildet werden. Dies liefert das Umkehrspiel mechanischer Übertragungsglieder. Wenn mehrachsige Sensoren eingesetzt werden, kann durch die doppelte Integration eine virtuelle Kreuzgitterfunktion realisiert werden. Der Vergleich zwischen einer Sollbahn und dem virtuellen Kreuzgitter ergibt die Bahnabweichung.

Weiterhin kann vorgesehen sein, dass ein Driftabgleich der doppelt integrierten Messgröße anhand von Sensordaten zumindest eines anderen Sensors erfolgt. Somit können Sekundär-Informationen des zumindest einen anderen Sensors verwendet werden, um einen Driftabgleich durchzuführen. Beispielsweise kann das Signal des Beschleunigungssensors doppelt integriert und mit den Signalen des Lagesensors abgeglichen werden.

Eine aus mindestens einem Sensorsignal eines Beschleunigungssensors ermittelte, den Maschinenzustand beschreibende Kenngröße (z.B. Frequenzspektrum) wird erfasst und mit einer Referenzgröße (z.B. Frequenzspektrum im Neu-Zustand) verglichen. Durch diese Maßnahme wird die Darstellung einer Betriebsschwingung möglich. Schwachstellen und Risse können durch diese Maßnahme erkannt werden.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung in verschiedenen Stadien der Benutzung dargestellt und in der nachfolgenden Beschreibung näher erläutert.

Es zeigen:
- Fig. 1: eine stark schematisierte Ansicht einer Werkzeugmaschine;
- Fig. 2.: eine erste Ausführungsform eines Sensornetzwerks;
- Fig. 3: eine zweite Ausführungsform eines Sensornetzwerks;
- Fig. 4: eine schematische Darstellung zur weiteren Erläuterung der Erfindung;
- Fig. 5: eine weitere schematische Darstellung zur Erläuterung der Erfindung.

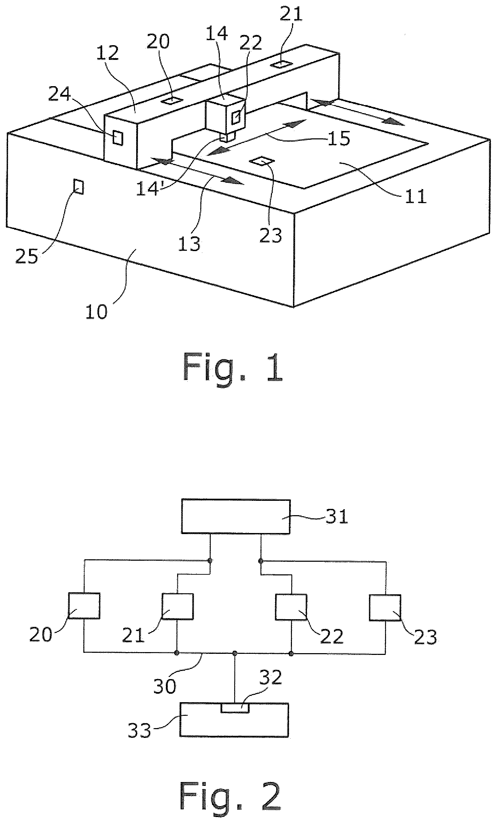

Die Fig. 1 zeigt eine Werkzeugmaschine 10 zur Bearbeitung eines Werkstücks 11. Im gezeigten Ausführungsbeispiel kann ein Portal 12 in Doppelpfeilrichtung 13 bewegt werden und kann relativ zum Portal 12 ein Werkzeughalter 14 mit einem Werkzeug 14' in Doppelpfeilrichtung 15 bewegt werden. Durch das Werkzeug 14' erfolgt die Werkstückbearbeitung des Werkstücks 11.

Bei der Bewegung des Portals 12 und des Werkzeughalters 14 kann es zu Schwingungen an der Werkzeugmaschine 10 kommen. Um diese Schwingungen zu erfassen, sind erste Sensoren 20 bis 23 vorgesehen, wobei die Anzahl und Anordnung der Sensoren 20 bis 23 nur beispielhaft gewählt ist. Allerdings ist zu bemerken, dass der Sensor 23 am Werkstück 11 selbst angeordnet ist, um Werkstückschwingungen zu erfassen. Es ist jedoch auch denkbar, Sensoren 20 bis 23 lediglich an Maschinenteilen und nicht am Werkstück 11 vorzusehen. Insbesondere können die Sensoren 20 bis 23 an Stellen vorgesehen werden, an denen Schwingungen zu erwarten sind. Die Sensoren 20 bis 23 können als Beschleunigungssensoren ausgebildet sein, insbesondere als MEMS-Sensoren. Die Sensoren 20 bis 23 können miteinander vernetzt sein.

Weiterhin sind weitere Sensoren 24, 25 vorgesehen, durch die andere Messgrößen als durch die Sensoren 20 bis 23 erfasst werden können. Auch die Sensoren 24, 25 können vernetzt sein. Sie können in einem eigenen Netzwerk vernetzt sein oder sie können gemeinsam mit den Sensoren 20 bis 23 vernetzt sein. Bei den Sensoren 24, 25 kann es sich beispielsweise um Temperatur- oder Lagesensoren handeln.

Aus der schematischen Darstellung der Figur 2 kann man entnehmen, dass die Sensoren 20 bis 23 durch ein Netzwerk 30 vernetzt sind. Das Netzwerk 30 kann ein drahtloses oder ein verdrahtetes Netzwerk sein. Weiterhin stehen die Sensoren 20 bis 23 mit einer Synchronisationseinrichtung 31 in Verbindung, durch die die Messgrößenerfassung der Sensoren 20 bis 23 getriggert und damit zeitlich synchronisiert werden kann. Durch die Synchronisationseinrichtung 31 wird eine Zeitbasis für die Messgrößenerfassung durch die Sensoren 20 bis 23 geliefert.

Die von den Sensoren 20 bis 23 gemessenen Messgrößen können an eine Speichereinrichtung 32 übertragen werden. Die Speichereinrichtung 32 kann in einer Maschinensteuerung 33 oder außerhalb der Maschinensteuerung 33 angeordnet sein. Die Messwerte der Sensoren 20 bis 23 können jedoch auch unter Umgehung des Speichers 32 direkt an die Maschinensteuerung 33 gegeben werden, wo diese ausgewertet und für eine Diagnose und/oder Maschinenregelung verwendet werden können.

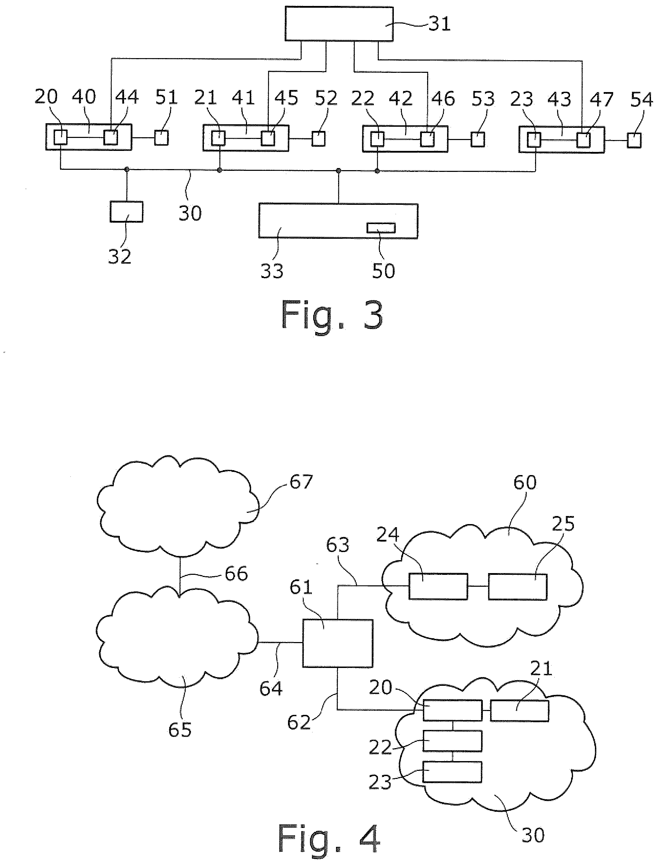

Die Figur 3 zeigt eine Abwandlung der Ausführungsform gemäß der Figur 2. In dieser Ausführungsform sind die Sensoren 20 bis 23 in Sensormodulen 40 bis 43 angeordnet. Die Sensoren 20 bis 23 sind nach wie vor über das Netzwerk 30 miteinander vernetzt. In diesem Fall sind die Sensoren 20 bis 23 nicht unmittelbar mit der Synchronisationseinrichtung 31 verbunden, sondern sie sind mit der Synchronisationseinrichtung 31 über Zeitgeber 44 bis 47 verbunden, die durch die Synchronisationseinrichtung 31 synchronisiert werden und die Messgrößenerfassung der Sensoren 20 bis 23 triggern.

Das Netzwerk 30 und die Messgrößenerfassung sind so ausgelegt, dass die zeitsynchronisiert erfassten Messgrößen in Echtzeit, insbesondere in einem selben Zeitintervall, in einer Auswerteeinrichtung 50 ankommen. Im gezeigten Ausführungsbeispiel ist die Auswerteeinrichtung 50 in der Maschinensteuerung 33 angeordnet. Sie könnte jedoch auch außerhalb der Maschinensteuerung 33 angeordnet sein. Durch die Auswerteeinrichtung 50 kann eine Auswertung der Messgrößen und gegebenenfalls eine Integration und/oder doppelte Integration der Messgrößen erfolgen. Weiterhin können die Messgrößen in dem Speicher 32 gespeichert werden.

Weiterhin ist zu erkennen, dass die Sensormodule 40 bis 43 jeweils mit einem eigenen Generator 51 bis 54 verbunden sind. Die Generatoren 51 bis 54 arbeiten autark und können beispielsweise aus Schwingungen oder elektromagnetischen Feldern der Werkzeugmaschine 10 Leistung generieren.

Die Sensormodule 40 bis 43 können mehr als einen Sensor, also mehrere Sensoren aufweisen. Beispielsweise kann ein Sensormodul 40 bis 43 Sensoren für Beschleunigungen und Drehraten in 6 Freiheitsgraden aufweisen. Durch die Auswertung der Messgrößen dieser Sensoren können Starrkörper-Bewegungen des überwachten Maschinenteils oder Werkstücks im Raum visualisiert und eventuell resultierende Verschiebungen der Werkzeugsposition ermittelt werden.

Aus der Darstellung der Figur 4 lässt sich entnehmen, dass die Sensoren 20 bis 23 in dem ersten Netzwerk 30 angeordnet sind. Die Sensoren 24, 25 können beispielsweise in einem zweiten Netzwerk 60 angeordnet sein. Das Netzwerk 30 kann datentechnisch mit einem Sensorknoten 61 verbunden sein, wobei die datentechnische Verbindung über einen für diesen Einsatzzweck optimierten Bus (beispielsweise einen Zweidraht-Bus) erfolgen kann. Das Netzwerk 60 kann ebenfalls datentechnisch mit dem Sensorknoten 61 verbunden sein. Die datentechnische Verbindung kann beispielsweise als CAN-Bus 63 ausgebildet sein.

Der Sensorknoten 61 kann datentechnisch, z.B. über ein Drahtlosnetzwerk 64, mit einem Maschinennetzwerk 65 verbunden sein. Das Maschinennetzwerk 65 kann beispielsweise über eine LAN-Verbindung 66 mit dem Internet oder einem Intranet 67 verbunden sein. Somit können durch die Sensoren 20 bis 25 erfasste Daten auch an einem entfernten Ort empfangen, ausgewertet und für Diagnosezwecke eingesetzt werden.

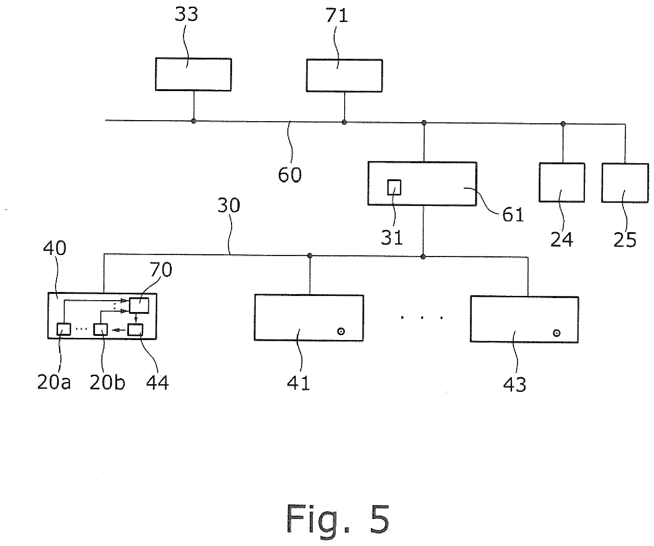

Die Fig. 5 zeigt eine alternative Ausführungsform der Vernetzung von Sensoren einer Werkzeugmaschine. Der Zusammenschluss von Sensoren 20a, 20b, Zeitgeber 44 (lokale Systemzeit), sowie einer lokalen Steuerung 70 kann ein Sensormodul 40 (die Sensormodule 40 - 43 der Figur3 können entsprechend ausgestaltet sein) ergeben. Viele Sensormodule 40 - 43 können an interessanten Punkten in der Maschine verteilt und über ein erstes Netzwerk 30 miteinander und mit einem Sensorknoten 61 verbunden sein. Der Sensorknoten 61 kann die Synchronisationseinheit 31 aufweisen oder als solche ausgebildet sein. Dieser Sensorknoten 61 kann eine Referenzzeitquelle für das erste Netzwerk 30, welches die Sensormodule 40 - 43 aufweist, enthalten, wodurch die synchrone Datenerfassung aller Sensoren 20a, 20b, 21, 22, 23 erfolgen kann. Die Referenzzeitquelle kann freilaufend ausgeführt sein oder ebenfalls zu übergeordneten Zeitquellen (z.B. über ein zweites Netzwerk 60) synchronisiert werden. Der Sensorknoten 61 ist vorliegend über ein zweites Netzwerk 60 u.a. mit der Maschinensteuerung 33 verbunden. Die vorstehend angesprochene Datenspeicherung oder Daten(vor)verarbeitung kann sowohl als auch in der Maschinensteuerung 33, dem Sensorknoten 61 oder den Sensormodulen 40 - 43 oder ggf. zusätzlichen Netzwerkteilnehmern vorhanden sein. An das zweite Netzwerk 60 können weitere Sensoren 24, 25 angeschlossen sein. Die Sensoren 24, 25 können ebenfalls in Sensormodulen angeordnet sein.

## Patentansprüche

1. Werkzeugmaschine (10) mit einer Mehrzahl von Sensoren (20-23) zur Erfassung je mindestens einer Messgröße, die in ein erstes Netzwerk (30) eingebunden sind, wobei die Werkzeugmaschine eine Synchronisationseinrichtung (31) umfasst, mit der die Sensoren (20-23) verbunden sind, zur synchronisierten und/oder getriggerten Erfassung von Messgrößen, **dadurch gekennzeichnet, dass** einer oder mehrere Sensoren (20-23) in einem Sensormodul (40-43) angeordnet sind, das einen Zeitgeber (44-47) aufweist, der mit der Synchronisationseinrichtung (31) verbunden ist, wobei die Sensoren (20-23) als Beschleunigungssensoren, insbesondere MEMS-Sensoren, zur Erfassung von Schwingungen ausgebildet sind und eine Auswerteinrichtung (50) vorgesehen ist, die eingerichtet ist, eine aus mindestens einem Sensorsignal eines Beschleunigungssensors der Mehrzahl der Sensoren (20-23) ermittelte, den Maschinenzustand beschreibende Kenngröße zu erfassen und mit einer Referenzgröße zu vergleichen.

2. Werkzeugmaschine nach Anspruch 1, **dadurch gekennzeichnet, dass** in das Netzwerk (30) ein oder mehrere weitere Sensoren (24, 25) zur Erfassung wenigstens einer zweiten Art von Messgröße eingebunden sind.

3. Werkzeugmaschine nach Anspruch 2, **dadurch gekennzeichnet, dass** zumindest ein weiterer Sensor (24, 25) als Drehratensensor, Magnetfeldsensor, Schallsensor, Temperatursensor, Feuchtigkeitssensor, optischer Sensor oder als multifunktionaler Sensor ausgebildet ist.

4. Werkzeugmaschine nach einem der vorhergehenden Ansprüche, **dadurch gekennzeichnet, dass** Beschleunigungssensoren für Beschleunigungen in unterschiedliche Achsrichtungen der Werkzeugmaschine (10) und/oder mehrachsige Beschleunigungssensoren vorgesehen sind.

5. Werkzeugmaschine nach einem der vorhergehenden Ansprüche, **dadurch gekennzeichnet, dass** ein zweites Netzwerk (60) vorgesehen ist, in das mehrere Sensoren (24, 25) eingebunden sind, wobei das erste und das zweite Netzwerk (30, 60) über einen Sensorknoten (61) verbunden sind.

6. Werkzeugmaschine nach einem der vorhergehenden Ansprüche, **dadurch gekennzeichnet, dass** das erste und/oder zweite Netzwerk (30, 60) mit einer Maschinensteuerung (33) verbunden sind.

7. Werkzeugmaschine nach einem der vorhergehenden Ansprüche, **dadurch gekennzeichnet, dass** zur Energieversorgung eines oder mehrerer Sensoren und/oder Sensormodule (40-43) ein Generator (51-54) zur Gewinnung von Energie aus der Umgebungstemperatur, Bewegungen, Luftströmungen oder elektromagnetischen Feldern vorgesehen ist.

8. Verfahren zur Überwachung und/oder Regelung einer Werkzeugmaschine (10), bei dem mehrere mit einer Synchronisationseinrichtung (31) verbundene Sensoren (20-23) in ein erstes Netzwerk (30) eingebunden werden und die Messgrößen der Sensoren (20-23) während des Betriebs der Werkzeugmaschine (10) erfasst werden, wobei die Messgrößen der Sensoren (20-23) synchronisiert und/oder getriggert erfasst werden, **dadurch gekennzeichnet, dass** einer oder mehrere Sensoren (20-23) in einem Sensormodul (40-43) angeordnet sind, das einen Zeitgeber (44-47) aufweist, der mit der Synchronisationseinrichtung (31) verbunden ist, wobei die Sensoren (20-23) als Beschleunigungssensoren, insbesondere MEMS-Sensoren, zur Erfassung von Schwingungen ausgebildet sind und eine Auswerteeinrichtung (50) eine aus mindestens einem Sensorsignal eines Beschleunigungssensors der mehreren Sensoren (20-23) ermittelte, den Maschinenzustand beschreibende Kenngröße erfasst und mit einer Referenzgröße vergleicht.

9. Verfahren nach Anspruch 8, **dadurch gekennzeichnet, dass** weitere Sensoren (24, 25) zur Erfassung weiterer Größen in das erste Netzwerk (30) eingebunden werden.

10. Verfahren nach einem der vorhergehenden Ansprüche 8 oder 9, **dadurch gekennzeichnet, dass** mindestens eine das dynamische Verhalten der Werkzeugmaschine (10) beschreibende Kenngröße aufgrund der Messgrößen geregelt wird.

11. Verfahren nach einem der vorhergehenden Ansprüche 8 bis 10, **dadurch gekennzeichnet, dass** ein oder mehrere Sensoren (20-25) und/oder Sensormodule (40-43) durch eine dezentrale Energiequelle mit Leistung versorgt werden.

12. Verfahren nach einem der vorhergehenden Ansprüche 8 bis 11, **dadurch gekennzeichnet, dass** die Messgröße zumindest eines Beschleunigungssensors doppelt integriert wird.

## Claims

1. A machine tool (10) having a plurality of sensors (20-23) for recording at least one measured variable each, which sensors are integrated into a first network (30), wherein the machine tool comprises a synchronisation device (31), with which the sensors (20-23) are connected, for the synchronised and/or triggered recording of measured variables, **characterised in that** one or a plurality of sensors (20-23) is arranged in a sensor module (40-43) having a timer (44-47) which is connected to the synchronisation device (31), wherein the sensors (20-23) are designed as acceleration sensors, in particular MEMS sensors, for recording vibrations and an evaluation device (50) is provided which is designed to record a parameter describing the machine condition determined from at least one sensor signal of an acceleration sensor of the plurality of sensors (20-23) and to compare it with a reference variable.

2. The machine tool according to claim 1, **characterised in that** one or a plurality of further sensors (24, 25) for recording at least a second type of measured variable is integrated into the network (30).

3. The machine tool according to claim 2, **characterised in that** at least one further sensor (24, 25) is designed as an angular rate sensor, magnetic field sensor, sound sensor, temperature sensor, moisture sensor, optical sensor or as a multifunctional sensor.

4. The machine tool according to any one of the preceding claims, **characterised in that** acceleration sensors for accelerations in different axial directions of the machine tool (10) and/or multi-axis acceleration sensors are provided.

5. The machine tool according to any one of the preceding claims, **characterised in that** a second network (60) is provided, in which a plurality of sensors (24, 25) is integrated, wherein the first and the second network (30, 60) are connected via a sensor node (61).

6. The machine tool according to any one of the preceding claims, **characterised in that** the first and/or second network (30, 60) are connected to a machine control (33).

7. The machine tool according to any one of the preceding claims, **characterised in that** a generator (51-54) for obtaining energy from the ambient temperature, movements, air currents or electromagnetic fields is provided to supply energy to one or a plurality of sensors and/or sensor modules (40-43).

8. A method for monitoring and/or controlling a machine tool (10), in which a plurality of sensors (20-23) connected to a synchronisation device (31) are integrated into a first network (30) and the measured variables of the sensors (20-23) are recorded during the operation of the machine tool (10), wherein the measured variables of the sensors (20-23) are recorded in a synchronised and/or triggered manner, **characterised in that** one or a plurality of sensors (20-23) is arranged in a sensor module (40-43), having a timer (44-47) which is connected to the synchronisation device (31), wherein the sensors (20-23) are designed as acceleration sensors, in particular MEMS sensors, for recording vibrations and an evaluation device (50) records a parameter which describes the machine condition and is determined from at least one sensor signal of an acceleration sensor of the plurality of sensors (20-23) and compares it with a reference variable.

9. The method according to claim 8, **characterised in that** further sensors (24, 25) are integrated into the first network (30) for recording further variables.

10. The method according to any one of preceding claims 8 or 9, **characterised in that** at least one parameter describing the dynamic behaviour of the machine tool (10) is regulated on the basis of the measured variables.

11. The method according to any one of the preceding claims 8 to 10, **characterised in that** one or a plurality of sensors (20-25) and/or sensor modules (40-43) is supplied with power by a decentralised energy source.

12. The method according to any one of the preceding claims 8 to 11, **characterised in that** the measured variable of at least one acceleration sensor is integrated twice.

## Revendications

1. Machine-outil (10) dotée d'une pluralité de capteurs (20-23), destinés à la détection respectivement d'au moins une grandeur de mesure, lesquels sont intégrés dans un premier réseau (30), dans laquelle la machine-outil comprend un dispositif de synchronisation (31) auquel les capteurs (20-23) sont reliés, destiné à la détection de manière synchronisée et/ou déclenchée de grandeurs de mesure, **caractérisée en ce que** l'au moins un capteur (20-23) est agencé dans un module de capteur (40-43), lequel comporte une minuterie (44-47), laquelle est reliée au dispositif de synchronisation (31), dans laquelle les capteurs (20-23) sont conçus sous la forme de capteurs d'accélération, en particulier de capteurs MEMS, pour détecter des vibrations et un dispositif d'évaluation (50) est fourni, lequel est conçu pour détecter une grandeur caractéristique, déterminée à partir d'au moins un signal de capteur d'un capteur d'accélération de la pluralité de capteurs (20-23), décrivant l'état de la machine et pour la comparer à une grandeur de référence.

2. Machine-outil selon la revendication 1, **caractérisée en ce qu'**au moins un autre capteur (24, 25) destiné à la détection d'au moins un second type de grandeur de mesure est intégré dans le réseau (30).

3. Machine-outil selon la revendication 2, **caractérisée en ce que** l'au moins un autre capteur (24, 25) est conçu sous la forme de capteur de vitesse de rotation, de capteur de champ magnétique, de capteur sonore, de capteur de température, de capteur d'humidité, de capteur optique ou sous la forme de capteur multifonction.

4. Machine-outil selon l'une quelconque des revendications précédentes, **caractérisée en ce que** des capteurs d'accélération pour les accélérations dans différentes directions axiales de la machine-outil (10) et/ou des capteurs d'accélération à axes multiples sont fournis.

5. Machine-outil selon l'une quelconque des revendications précédentes, **caractérisée en ce qu'**un second réseau (60) est fourni, dans lequel plusieurs capteurs (24, 25) sont intégrés, dans laquelle le premier et le second réseau (30, 60) sont reliés au moyen d'un nœud de capteur (61).

6. Machine-outil selon l'une quelconque des revendications précédentes, **caractérisée en ce que** le premier et/ou le second réseau (30, 60) sont reliés à une commande de machine (33).

7. Machine-outil selon l'une quelconque des revendications précédentes, **caractérisée en ce que**, pour l'alimentation en énergie de l'au moins un capteur et/ou module de capteur (40-43), un générateur (51-54) est fourni pour récupérer de l'énergie à partir de la température ambiante, des mouvements, des courants d'air ou des champs électromagnétiques.

8. Procédé de surveillance et/ou de régulation d'une machine-outil (10), selon lequel plusieurs capteurs (20-23) reliés à un dispositif de synchronisation (31) sont intégrés dans un premier réseau (30) et les grandeurs de mesure des capteurs (20-23) lors du fonctionnement de la machine-outil (10) sont détectées, dans lequel les grandeurs de mesure des capteurs (20-23) sont détectées de manière synchronisée et/ou déclenchée, **caractérisé en ce que** l'au moins un capteur (20-23) est agencé dans un module de capteur (40-43) comportant une minuterie (44-47), laquelle est reliée au dispositif de synchronisation (31), dans lequel les capteurs (20-23) sont conçus sous la forme de capteurs d'accélération, en particulier de capteurs MEMS, pour détecter des vibrations et un dispositif d'évaluation (50) détecte une grandeur caractéristique, déterminée à partir d'au moins un signal de capteur d'un capteur d'accélération des plusieurs capteurs (20-23) décrivant l'état de la machine et la compare à une grandeur de référence.

9. Procédé selon la revendication 8, **caractérisé en ce que** d'autres capteurs (24, 25) destinés à la détection d'autres grandeurs sont intégrés dans le premier réseau (30).

10. Procédé selon l'une quelconque des revendications précédentes 8 ou 9, **caractérisé en ce qu'**au moins une grandeur caractéristique décrivant le comportement dynamique de la machine-outil (10) est réglée en fonction des grandeurs de mesure.

11. Procédé selon l'une quelconque des revendications précédentes 8 à 10, **caractérisé en ce que** l'au moins un capteur (20-25) et/ou module de capteur (40-43) sont alimentés en énergie au moyen d'une source d'énergie décentralisée.

12. Procédé selon l'une quelconque des revendications précédentes 8 à 11, **caractérisé en ce que** la grandeur de mesure de l'au moins un capteur d'accélération est doublement intégrée.
